# EUROPEAN PATENT SPECIFICATION

(11) **EP 4 163 140 B1**
(45) Date of publication and mention of the grant of the patent: **16.07.2025**
(21) Application number: 22188496.8
(22) Date of filing: 03.08.2022
(51) Int. Cl.: B60K 11/04, F28D 9/00

(54) **AIR COOLER**
LUFTKÜHLER
REFROIDISSEUR D'AIR

(30) Priority: 07.10.2021 DE 102021126003
(43) Date of publication of application: 12.04.2023
(73) Proprietor: Liebherr-Components Colmar SAS, 68025 Colmar Cedex (FR)
(72) Inventor: BINDNER, Thierry, 67000 Straßburg (FR); POURRE, Olivier, 68150 Ribeauville (FR)
(74) Representative: Behr, Wolfgang

(56) References cited:
- EP-A1- 2 703 765
- EP-A1- 3 808 954
- DE-A1- 102017 111 409
- DE-A1- 102020 120 332
- JP-A- 2004 092 935
- US-A- 2 462 421

## Description

The present invention relates to an air cooler, in particular a charge air cooler, comprising a casing and a heat exchange block arranged in the casing.

In one known configuration, the heat exchange block of such a cooler comprises a plurality of heat exchange plates stacked in a first traverse direction and extending in a plane defined by the axial direction and a second transverse direction, with coolant channels extending in the heat exchanges plates. The heat exchange plates may in particular be made from aluminium.

The main function of a charge air cooler is to reduce the temperature of compressed air from the turbochargers before it enters the intake manifold and finally the combustion chamber.

More specifically, a charge air cooler is exchanging heat coming from the hot air pushed into the air compartment by the turbochargers to the cold water pushed into the water passages by the water pumps.

This heat exchange between hot air and cold water is creating locally extreme high thermo stress into the separation wall separating air compartments from water passages at locations where the temperature difference between air and water is the highest and where the geometry is the stiffest by design.

In order to reduce the breakage risk caused by thermomechanical fatigue, known charge air coolers are using either:
1. Tube type charge air cooler. These types of coolers are however less efficient in terms of heat exchange than the plate type coolers. The same level of heat exchange would require much bigger and heavier cooler. Heavy and big coolers are finally complex to be installed on engine.
2. Stainless steel plate coolers. Even if these coolers are better in terms of efficiency than the tube type coolers, these types of coolers are also less efficient in terms of heat exchange than the aluminum plate type coolers. The added weight is also creating engine architecture complexity.
3. Aluminum plate cooler with air fins removed to allow a defined expansion in the core and finally avoid cracks caused by excessive stress. This feature is however complex in construction.
4. Aluminum plate cooler with variable air fins density to limit the quantity of heat exchanged to water and finally reduce the thermos stress. This feature is however complex in construction.

Document DE102017111409 A1 shows an air cooler according to the preamble of claim 1, where protective elements are provided on the axial front surfaces of the heat exchange plates. Further prior art is known from EP2703765 A1, EP3808954 A1, JP2004092935 A, DE102020120332 A1 and US2462421 A.

The object of the present invention is to provide an improved air cooler, in particular an improved charge air cooler.

This object is solved by a cooler according to claim 1. Preferred embodiments of the present invention are the subject matter of the dependent claims.

The present invention comprises an air cooler, comprising a casing and a heat exchange block arranged in the casing, the casing comprising an air inlet and and air oulet, with an air flow path extending from the inlet to the outlet through the heat exchange block, with the air flow path extending in an axial direction through the heat exchange block, the heat exchange block comprising a plurality of heat exchange plates stacked in a first traverse direction and extending in a plane defined by the axial direction and a second transverse direction, with coolant channels extending in the heat exchanges plates, wherein at least one protective element is provided on an axial front surface of a heat exchange plate. Further, grooves are provided in at least one out of side portions of the heat exchange block, the casing and/or a welding seam connecting the casing with the heat exchange block, with end portions of the protective element arranged in the grooves.

The air cooler may in particular be a charge air cooler.

The inventors have realized that thermomechanical fatigue in a plate type air cooler may lead to breakage without counter-measures and that the main influences are the thermocycle numbers, the thermocycle amplitude, i.e. the temperature difference between hot and cold condition, and the speed of the temperature changes. Further, the inventors realized that in particular the axial front surface of a heat exchange plates facing the air inlet is submitted to large thermocycle amplitudes, as it is the part of the heat exchange plates that come first into contact with the hot air.

The protective element will act like a partial heat shield to protect this sensitive structural part of the heat exchange block from the heat.

In particular, the protective element covering at least a part of the axial front surface of a heat exchange plate will reduce the thermocycle amplitude or at least reduce the speed in which temperature changes on the axial front surface, therefore reducing thermomechanical stress.

In an embodiment, the protective element or elements are provided on the front surface of the heat exchange plates facing the air inlet.

In an embodiment, the protective element extends in the second transverse direction along the front surface of the heat exchange plate to at least partly cover the axial front surface of the heat exchange plate.

In an embodiment, the protective element extends along the axial front surface of the heat exchange plate over the entire extension of the heat exchange plate in the second transverse direction.

In an embodiment, the protective element covers at least a middle section of the heat exchange plate in the first transverse direction.

In an embodiment, the thickness of the protective element in the first transverse direction is smaller than or the same as the thickness of the heat exchange plate.

In an embodiment, the thickness of the protective element in the first transverse direction is such that it covers a cooling channel extending within the heat exchange plate. In particular, the thickness of the protective element in the first transverse direction may be equal to or larger than a thickness of a cooling channel extending within the heat exchange plate.

In an embodiment, a plurality of protective elements are provided, each arranged on an axial front surface of a heat exchange plate.

In an embodiment, each heat exchange plate is provided with a protective element.

In an embodiment, the protective element is placed on the front surface of the heat exchange plate without a substance-to-substance bond thereto. This will avoid thermomechanical stress to be transmitted from the protective element to the front surface of the heat exchange plate.

In an embodiment, the protective element is arranged in the air cooler without a substance-to-substance bond. This will avoid thermomechanical stress to be transmitted from the protective element to the structural parts of the cooler.

In an embodiment, the connection of the protective element to the air cooler allows an independent thermal expansion and contraction of the protective element in the axial and/or second transverse direction relative to the heat exchange plate and/or the casing.

In particular, there may be no direct mechanical fixation of the protective element to the heat exchange plate.

Further, the connection of the protective element to the casing may allow for a movement of the protective element due to thermal expansion and contraction.

In an embodiment, the end portions of the protective element are arranged in the grooves without a substance-to-substance connection thereto.

In an embodiment, the grooves are provided in the casing and extend though a welding seam connecting the casing with the heat exchange block.

In an embodiment, the grooves are provided in an axial front surface of a first casing element, with a second casing element connected to the first casing element covering the grooves in an axial direction for fixing the protective element in the axial direction.

In an embodiment, a plurality of parallel grooves are provided extending in the second transverse direction, with a further groove extending in the first transverse direction connecting the grooves and forming the end region of the grooves.

In an embodiment, the end portions of the protective element are arranged in the grooves with a gap provided in the second transverse direction and/or the axial direction to allow thermal expansion of the protective element.

In an embodiment, the end portions of the protective element arranged in the grooves extend at an elevated axial level with a distance to the axial level of a main part of the protective element arranged on the axial front surface of the heat exchange plate.

In an embodiment, the end portions are connected to the main part by an arcuate connection part.

In an embodiment, the protective element is fixed in the air cooler by a spring force, wherein preferably, at least one end portion of the protective element forms a spring element for providing the spring force.

In an embodiment, the spring force urges the protective element against the front surface of the heat exchange plate in the axial direction.

In an embodiment, the heat exchange block and/or the heat exchange plates may be made from aluminum. Alternatively, the heat exchange block and/or the heat exchange plates may be made from steel.

In an embodiment, the protective element is made from metal. The protective element may be made from a different metal than the heat exchange block. Alternatively, the protective element may be made from the same metal as the heat exchange block.

In an embodiment, the protective element may be made from aluminum or steel.

In an embodiment, the heat exchange block may be a brazed structure.

In an embodiment, the heat exchange plates may be brazed from two plates forming the side walls of the heat exchange plates. Distance elements may be provided between the plates. The distance elements may be brazed to the plates at least on an axial front surface. The cooling passages may be formed by passages extending between the plates in the second transverse direction.

In an embodiment, the protective element is a metal profile.

In an embodiment, the protective element is cut from a metal plate.

In an embodiment, the protective element is provided just above the hot face of the coolant block and placed specifically above the water channels to protect the air to water separation walls against high air temperature flow. These profiles will finally act like partial heat shield to protect the sensitive structural part of the block from the heat.

The present invention further comprises an engine comprising an air cooler as described above. The engine may in particular be an internal combustion engine.

In an embodiment, the air cooler is provided between the outlet of a compressor and an air inlet of the engine. The compressor may be part of a turbocharger.

The present invention will now be described in more detail with respect to preferred embodiments and figures.

The figures show:
- Fig. 1: a schematic side view showing an embodiment of a heat exchanger of the present invention, and a perspective view of the main element including the heat exchange block of the embodiment,
- Fig. 2: a perspective partial view showing the axial front surface of the heat exchange block with the protective elements removed,
- Fig. 3: a showing the same partial view as Fig. 2 with the protective elements inserted,
- Fig. 4: a cut through an axial plane through the heat exchanger and
- Fig. 5: an embodiment of an engine of the present invention including the heat exchanger.

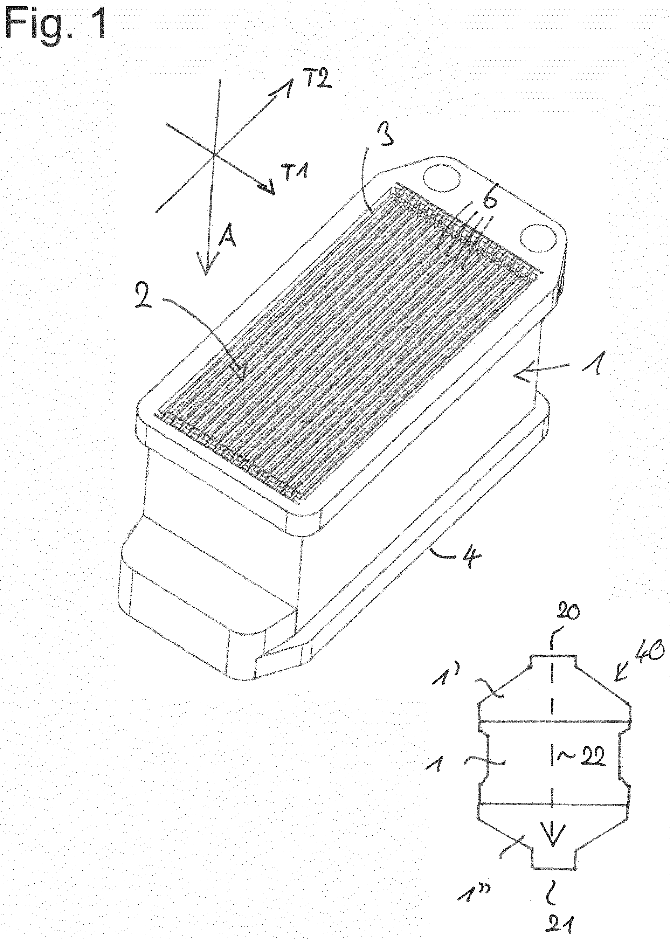

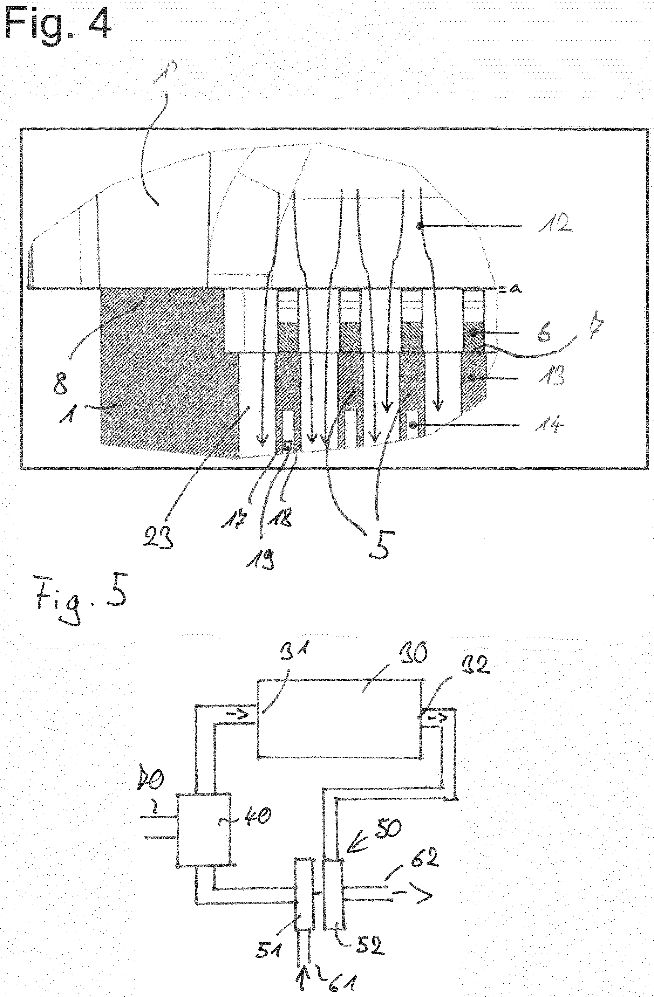

Fig. 1 to 4 show an embodiment of a cooler 40, in particular a charge air cooler, according to the invention. Fig. 5 shows an embodiment of an engine 30 including the charge air cooler 40.

In the embodiment, the engine 30 comprises an air inlet manifold 31 and an exhaust gas manifold 32. A turbocharger comprising a compressor 51 and a turbine 52, the turbine driven by the exhaust gas, is provided for pressurizing air entering via the air inlet 61 of the engine.

The charge air cooler 40 is located between the compressor 51 of the turbo charger and the air inlet manifold 31 of the engine 30. The hydraulic side of the charge air cooler 40 is connected to a cooling circuit 70 of the engine providing cooling liquid such as water for cooling the charge air flowing through the air flow path of the charge air cooler.

When the turbo charger 50 in running at full power, the compressed air is rather hot, with temperatures ranging between 200 and 250 °C. In contrast, with low loads, the charge air is rather cold. Therefore, there is a lot of temperature stress on the charge air cooler 40. The present invention can however also applied to other types of air coolers.

The perspective view in Fig. 1 shows the central part of the heat exchanger, which comprises a heat exchange block 2 arranged in a casing 1.

The smaller side view schematically shows the entire heat exchanger 40 including the casing 1, as well as casing elements 1' and 1" in which the air inlet 20 and the air outlet 21 are provided, such that an air flow path 22 will extend from the air inlet 20 to the air outlet 21 in an axial direction A of the heat exchange block 2. In an alternative embodiment, several heat exchange blocks may be provided in parallel or in series in the heat exchanger 40.

In the embodiment, the heat exchange block 2 is a brazed structure made from aluminium.

As can be seen from Fig. 4, the heat exchange block comprises a number of parallel heat exchange plates 5 arranged next to each other in a first transverse direction T1 and extending in a plane spanned by the axial direction A and the second transverse direction T2. Between the heat exchange plates 5, air will flow in an axial direction A of the heat exchange block though air paths 23 provided between the heat exchange plates 5. Within the heat exchange plates 5, water will flow in a second transverse direction T2.

In the embodiment, the heat exchange plates 5 are formed by brazing two aluminium plates 17, 18 to each other, and by arranging flow channel separators 19 and/or turbulence generators in between the plates. Thereby, in between two Al plates 17, 18, which are brazed to each other to form heat exchange plate 5, a number of separate flow channels 14 are created which are arranged next to each other in the axial direction A and go through the heat exchange plates 5 in the second transverse direction T2. The axial front side ends 13 of the heat exchange plates are equally formed by brazing a separator to the Al plates, and therefore form a separation wall between the water channels and air.

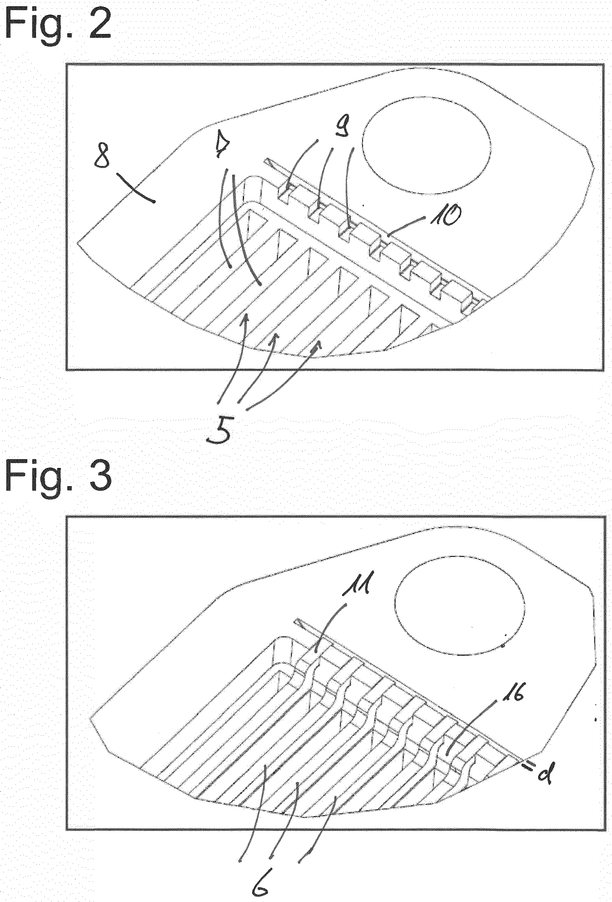

In the embodiment, the heat exchange block 2 is welded with a welding seam 16 partly shown in Fig. 3 around a periphery of its axial faces with the housing 1 of the heat exchanger.

The hot air will therefore flow from a first axial front side 3 of the heat exchange block through the heat exchange block 2 to a second axial front side 4, with the upper ends 13 of the heat exchange plates 5 on the first axial front side 3 being the first part of the heat exchange block to the contacted with the hot air 12, see Fig. 4.

Therefore, the front face of the heat exchange block 2 that is on the entry side, and which is formed by the front ends 13 of the heat exchange plates 5 which are brazed structures, gets very hot, with the temperature decreasing quickly in the axial direction due to the cooling action of the water flowing through the heat exchange plates 5. Therefore, the axial front side of the heat exchange block 2 facing the entry side becomes very hot with full load and quickly changes temperature with a varying duty cycle. It therefore easily suffers from thermal fatigue.

Similar problems might also occur in air coolers where the heat exchange block is not an Al brazed structure, but for example a steel construction comprising heat exchange plates, such that the invention is not restricted to aluminium heat exchange blocks.

The inventions aims at protecting this front side of the heat exchange plates 5 by providing protective elements 6 at least partly covering the front faces 7 of the heat exchange plates 5 facing the entry side. In the embodiment, the protective elements 6 have a smaller thickness than the heat exchange plates 5 in the first transverse direction T1, and are arranged to protect the middle part of the front surface 7 of the heat exchange plates.

In order to avoid cracks due to different thermal expansion, the protective elements 6 are not fixed or fixedly connected to the front end surfaces 7 of the heat exchange plates 5, but only abut them while being moveable in a direction along the extension of the front end surfaces of the heat exchange plates in the second transverse direction T2.

In the embodiment, all the heat exchange plates are provided with a protective element, but the invention is not limited to this. For example, protective elements may only be provided on the heat exchange plates where thermomechanical stress is highest, such as the heat exchange plates on both ends in the first transverse direction.

The connection of the protective elements 6 with the heat exchanger is only provided, as show in Fig. 2 and 3, by inserting the ends 11 of the protective elements in grooves 9 provided in the weld seam 16 and/or the housing 1 of the heat exchanger. The ends 11 of the protective elements 6 are arranged in these grooves 9 and thereby fixed at a position above the respective heat exchange plate 5 in the first transverse direction T1. However, they are free to expand and to contract in the second transverse direction T2, because the grooves 9 are longer by an expansion space d than the protective elements.

In the embodiment, the grooves 9 in which the protective elements 5 are arranged are created by cutting slots in the second transverse direction T2, and connecting them at their end portions by a slot 10 extending in the first transverse direction T1. This simplifies manufacture and provides a controllable length to the grooves 9 in the second transverse direction T2. In the embodiment, the grooves 9 and 10 are provided in a flange surface 8 of the housing 1 where the housing 1 is connected to another housing element 1'.

The protective elements 6 are also allowed to contract and to expand in the axial direction A, by providing a certain gap on the lower or upper side in the grooves 9 in which they are arranged.

In particular, as shown in Fig. 4, the grooves 9 are closed in the axial direction A by a housing element 1' connected to the housing part 1 in which the grooves 9 are provided. An axial gap a is left between the lower surface of the housing element 1' that closes the grooves and the upper side of the end portions 11 of the protective elements 5.

In the embodiment shown, the protective elements 5 are simply movable in the axial and in the second transverse direction due to the gaps a and d left between the end portions 11 of the protective elements and the housing.

In a further embodiment, the end portions 11 of the protective elements form flexible spring portions, for example by providing them as curved sections, and are inserted under a certain axial force with the housing element 1' that closes the grooves 9 in the axial direction. An internal expansion in the axial direction will be allowed due to the flexibility of the spring portions. Further, due to the spring pressure in the axial direction, a rattling movement in the transverse direction would equally be avoided.

Even though the protective elements 6 directly abut with the front surfaces 7, the heat transfer from the protective element 5 to the heat exchange plates can be limited if the heat exchange plates are braised at the front surfaces, and therefore not entirely flat. In a possible embodiment, the braised front surfaces 7 of the heat exchange plates are therefore machined in order to provide a flat surface, which provides a better thermal contact with the back surfaces of the protective elements.

In the embodiment, the protective elements 5 are made from stainless steel or aluminium.

In an embodiment, the protective elements may be profiles cut from a metal sheet, for example by laser cutting.

As can be seen in Fig. 2 and 3, the ends 11 of the protective elements have, in the embodiment, a curved structure curving upwards from the plane formed by the area that abuts with the front surfaces 7 of the heat exchange plates 5. Thereby, they reach into the grooves 9 provided in the housing 1 at an axial position that is elevated with respect to the front surfaces 7.

If the end portions 11 are to be formed as spring elements, one or more cutouts in the end portions 11 could be used to reduce the material thickness and therefore make the end portions more flexible.

In summary, the invention adds a metal profile just above the hot face of the heat exchange block placed specifically above the water channels 4 of the heat exchange plates 5 to protect separation walls 13 air to water against high air temperature flow.

These profiles will act like partial heat shield to protect the sensitive structural part of the block from the heat.

The protective elements will smoothen the temperature changes at the front surface 7 of the heat exchange plates 5 in comparison with the prior art solution, because the hot air will first of all abut on the protective element 5 and heat the protective element, and therefore reduce the amplitude of temperature cycles.

The protective elements may also lead to a reduction of the maximum temperature that the front surfaces 7 of the heat exchange plates 5 will suffer.

## Claims

1. An air cooler (40), in particular a charge air cooler, comprising a casing (1) and a heat exchange block (2) arranged in the casing, the casing comprising an air inlet (20) and and air outlet (21), with an air flow path (22) extending from the inlet to the outlet through the heat exchange block, with the air flow path extending in an axial direction (A) through the heat exchange block, the heat exchange block comprising a plurality of heat exchange plates (17, 18) stacked in a first traverse direction (T1) and extending in a plane defined by the axial direction and a second transverse direction (T2), with coolant channels (4) extending in the heat exchanges plates, wherein at least one protective element (6) is provided on an axial front surface of a heat exchange plate,
**characterized in that**
grooves (9) are provided in at least one out of side portions of the heat exchange block, the casing and/or a welding seam (16) connecting the casing with the heat exchange block, with end portions (11) of the protective element arranged in the grooves.

2. The air cooler of claim 1, wherein the protective element extends in the second transverse direction along the front surface of the heat exchange plate to at least partly cover the axial front surface of the heat exchange plate.

3. The air cooler of claim 1 or 2, wherein the protective element extends along the axial front surface of the heat exchange plate over the entire extension of the heat exchange plate in the second transverse direction, and/or wherein the protective element covers at least a middle section of the heat exchange plate in the first transverse direction, wherein the thickness of the protective element in the first transverse direction is preferably smaller than or the same as the thickness of the heat exchange plate.

4. The air cooler of any one of the preceding claims, wherein a plurality of protective elements are provided, each arranged on an axial front surface of a heat exchange plate, wherein preferably each heat exchange plate is provided with a protective element.

5. The air cooler of any one of the preceding claims, wherein the protective element is placed on the front surface of the heat exchange plate without a substance-to-substance bond thereto, wherein preferably the protective element is arranged in the air cooler without a substance-to-substance bond.

6. The air cooler of any one of the preceding claims, wherein the connection of the protective element to the air cooler allows an independent thermal expansion and contraction of the protective element in the axial and/or second transverse direction relative to the heat exchange plate and/or the casing.

7. The air cooler of any one of the preceding claims, wherein the end portions of the protective element are arranged in the grooves without a substance-to-substance connection thereto.

8. The air cooler of any one of the preceding claims, wherein the grooves are provided in the casing and extend though a welding seam connecting the casing with the heat exchange block.

9. The air cooler of any one of the preceding claims, wherein the grooves are provided in an axial front surface of a first casing element, with a second casing element connected to the first casing element covering the grooves in an axial direction for fixing the protective element in the axial direction.

10. The air cooler of any one of the preceding claims, wherein a plurality of parallel grooves are provided extending in the second transverse direction, with a further groove extending in the first transverse direction connecting the grooves and forming the end region of the grooves.

11. The air cooler of any one of the preceding claims, wherein the end portions of the protective element are arranged in the grooves with a gap provided in the second transverse direction and/or the axial direction to allow thermal expansion of the protective element.

12. The air cooler of any one of the preceding claims, wherein the end portions of the protective element arranged in the grooves extend at an elevated axial level with a distance to the axial level of a main part of the protective element arranged on the axial front surface of the heat exchange plate, wherein preferably, the end portions are connected to the main part by an arcuate connection part.

13. The air cooler of any one of the preceding claims, wherein the protective element is fixed in the air cooler by a spring force, wherein preferably, at least one end portion of the protective element forms a spring element for providing the spring force.

14. The air cooler of claim 13, wherein the spring force urges the protective element against the front surface of the heat exchange plate in the axial direction.

15. An engine comprising an air cooler according to any one of the preceding claims, wherein the air cooler is preferably provided between the outlet of a compressor of a turbocharger and an air inlet of the engine.

## Patentansprüche

1. Luftkühler (40), insbesondere ein Ladeluftkühler, umfassend ein Gehäuse (1) und einen Wärmetauscherblock (2), der in dem Gehäuse angeordnet ist, wobei das Gehäuse einen Lufteinlass (20) und einen Luftauslass (21) umfasst, wobei sich ein Luftströmungsweg (22) von dem Einlass zu dem Auslass durch den Wärmetauscherblock erstreckt, wobei sich der Luftströmungsweg in einer axialen Richtung (A) durch den Wärmetauscherblock erstreckt, wobei der Wärmetauscherblock eine Vielzahl von Wärmetauscherplatten (17, 18) umfasst, die in einer ersten Querrichtung (T1) gestapelt sind und sich in einer Ebene erstrecken, die durch die axiale Richtung und eine zweite Querrichtung (T2) definiert ist, wobei sich Kühlmittelkanäle (4) in den Wärmetauscherplatten erstrecken,
wobei zumindest ein Schutzelement (6) auf einer axialen vorderen Fläche einer Wärmetauscherplatte vorgesehen ist,
**dadurch gekennzeichnet, dass**
Nuten (9) in Seitenabschnitten des Wärmetauscherblocks und/oder dem Gehäuse und/oder einer Schweißnaht (16), die das Gehäuse mit dem Wärmetauscherblock verbindet, vorgesehen sind, wobei Endabschnitte (11) des Schutzelements in den Nuten angeordnet sind.

2. Luftkühler nach Anspruch 1, wobei sich das Schutzelement in der zweiten Querrichtung entlang der vorderen Fläche der Wärmetauscherplatte erstreckt, um zumindest teilweise die axiale vordere Fläche der Wärmetauscherplatte zu bedecken.

3. Luftkühler nach Anspruch 1 oder 2, wobei sich das Schutzelement entlang der axialen vorderen Fläche der Wärmetauscherplatte über die gesamte Erstreckung der Wärmetauscherplatte in der zweiten Querrichtung erstreckt und/oder wobei das Schutzelement zumindest einen mittleren Abschnitt der Wärmetauscherplatte in der ersten Querrichtung bedeckt, wobei die Dicke des Schutzelements in der ersten Querrichtung vorzugsweise kleiner als oder so groß wie die Dicke der Wärmetauscherplatte ist.

4. Luftkühler nach einem der vorstehenden Ansprüche, wobei eine Vielzahl von Schutzelementen bereitgestellt sind, die jeweils auf einer axialen vorderen Fläche einer Wärmetauscherplatte angeordnet sind, wobei vorzugsweise jede Wärmetauscherplatte mit einem Schutzelement versehen ist.

5. Luftkühler nach einem der vorstehenden Ansprüche, wobei das Schutzelement auf der vorderen Fläche der Wärmetauscherplatte ohne eine stoffschlüssige Bindung daran platziert ist, wobei vorzugsweise das Schutzelement in dem Luftkühler ohne eine stoffschlüssige Bindung angeordnet ist.

6. Luftkühler nach einem der vorstehenden Ansprüche, wobei die Verbindung des Schutzelements mit dem Luftkühler eine unabhängige Wärmeausdehnung und -kontraktion des Schutzelements in der axialen und/oder der zweiten Querrichtung bezüglich der Wärmetauscherplatte und/oder des Gehäuses erlaubt.

7. Luftkühler nach einem der vorstehenden Ansprüche, wobei die Endabschnitte des Schutzelements in den Nuten ohne eine stoffschlüssige Verbindung damit angeordnet sind.

8. Luftkühler nach einem der vorstehenden Ansprüche, wobei die Nuten in dem Gehäuse vorgesehen sind und sich durch eine Schweißnaht erstrecken, die das Gehäuse mit dem Wärmetauscherblock verbindet.

9. Luftkühler nach einem der vorstehenden Ansprüche, wobei die Nuten in einer axialen vorderen Fläche eines ersten Gehäuseelements vorgesehen sind, wobei ein zweites Gehäuseelement mit dem ersten Gehäuseelement verbunden ist, das die Nuten in einer axialen Richtung zum Fixieren des Schutzelements in der axialen Richtung bedeckt.

10. Luftkühler nach einem der vorstehenden Ansprüche, wobei eine Vielzahl von parallelen Nuten bereitgestellt sind, die sich in der zweiten Querrichtung erstrecken, wobei sich eine weitere Nut in der ersten Querrichtung erstreckt, die die Nuten verbindet und den Endbereich der Nuten bildet.

11. Luftkühler nach einem der vorstehenden Ansprüche, wobei die Endabschnitte des Schutzelements in den Nuten mit einem Spalt angeordnet sind, der in der zweiten Querrichtung und/oder der axialen Richtung bereitgestellt ist, um eine Wärmeausdehnung des Schutzelements zu erlauben.

12. Luftkühler nach einem der vorstehenden Ansprüche, wobei sich die Endabschnitte des Schutzelements, die in den Nuten angeordnet sind, auf einer erhöhten axialen Ebene mit einer Distanz zu der axialen Ebene eines Hauptteils des Schutzelements erstrecken, der auf der axialen vorderen Fläche der Wärmetauscherplatte angeordnet ist, wobei vorzugsweise die Endabschnitte durch einen bogenförmigen Verbindungsteil mit dem Hauptteil verbunden sind.

13. Luftkühler nach einem der vorstehenden Ansprüche, wobei das Schutzelement in dem Luftkühler durch eine Federkraft fixiert ist, wobei vorzugsweise zumindest ein Endabschnitt des Schutzelements ein Federelement zum Bereitstellen der Federkraft bildet.

14. Luftkühler nach Anspruch 13, wobei die Federkraft das Schutzelement gegen die vordere Fläche der Wärmetauscherplatte in der axialen Richtung drängt.

15. Motor umfassend einen Luftkühler nach einem der vorstehenden Ansprüche, wobei der Luftkühler vorzugsweise zwischen dem Auslass eines Kompressors eines Turboladers und einem Lufteinlass des Motors bereitgestellt ist.

## Revendications

1. Refroidisseur d'air (40), en particulier un refroidisseur d'air de suralimentation, comprenant un carter (1) et un bloc d'échange de chaleur (2) agencé dans le carter, le carter comprenant une entrée d'air (20) et une sortie d'air (21), un circuit d'écoulement d'air (22) s'étendant de l'entrée à la sortie à travers le bloc d'échange de chaleur, le circuit d'écoulement d'air s'étendant dans une direction axiale (A) à travers le bloc d'échange de chaleur, le bloc d'échange de chaleur comprenant une pluralité de plaques d'échange de chaleur (17, 18) empilées dans une première direction transversale (T1) et s'étendant dans un plan défini par la direction axiale et par une seconde direction transversale (T2), des canaux (4) de fluide de refroidissement s'étendant dans les plaques d'échange de chaleur,
dans lequel au moins un élément protecteur (6) est disposé sur une surface axiale avant de la plaque d'échange de chaleur,
**caractérisé en ce que**
des rainures (9) sont disposées dans au moins l'une des parties latérales du bloc d'échange de chaleur, du carter et/ou d'un joint de soudure (16) reliant le carter au bloc d'échange de chaleur, et des parties d'extrémité (11) de l'élément protecteur sont agencées dans les rainures.

2. Le refroidisseur d'air de la revendication 1, dans lequel l'élément protecteur s'étend dans la seconde direction transversale le long de la surface avant de la plaque d'échange de chaleur afin de recouvrir, au moins partiellement, la surface axiale avant de la plaque d'échange de chaleur.

3. Le refroidisseur d'air des revendications 1 ou 2, dans lequel l'élément protecteur s'étend le long de la surface axiale avant de la plaque d'échange de chaleur sur toute l'extension de la plaque d'échange de chaleur dans la seconde direction transversale, et/ou dans lequel l'élément protecteur recouvre au moins une section centrale de la plaque d'échange de chaleur dans la première direction transversale, et dans lequel l'épaisseur de l'élément protecteur dans la première direction transversale est de préférence inférieure ou égale à l'épaisseur de la plaque d'échange de chaleur.

4. Le refroidisseur d'air de l'une quelconque des revendications précédentes, dans lequel une pluralité d'éléments protecteurs est prévue, chaque élément protecteur étant agencé sur une surface axiale avant d'une plaque d'échange de chaleur, et dans lequel, de préférence, chaque plaque d'échange de chaleur est munie d'un élément protecteur.

5. Le refroidisseur d'air de l'une quelconque des revendications précédentes, dans lequel l'élément protecteur est placé sur la surface avant de la plaque d'échange de chaleur sans liaison substance à substance avec cette dernière, et dans lequel, de préférence, l'élément protecteur est agencé dans le refroidisseur d'air sans liaison substance à substance.

6. Le refroidisseur d'air de l'une quelconque des revendications précédentes, dans lequel le raccordement de l'élément protecteur au refroidisseur d'air permet une dilatation et une contraction thermiques indépendantes de l'élément protecteur dans la direction axial et/ou dans la seconde direction transversale par rapport à la plaque d'échange de chaleur et/ou au carter.

7. Le refroidisseur d'air de l'une quelconque des revendications précédentes, dans lequel les parties d'extrémité de l'élément protecteur sont agencées dans les rainures sans liaison substance à substance avec ces dernières.

8. Le refroidisseur d'air de l'une quelconque des revendications précédentes, dans lequel les rainures sont disposées dans le carter et s'étendent à travers un joint de soudure reliant le carter au bloc d'échange de chaleur.

9. Le refroidisseur d'air de l'une quelconque des revendications précédentes, dans lequel les rainures sont disposées dans une surface axiale avant d'un premier élément du carter, et un second élément du carter est relié au premier élément du carter recouvrant les rainures dans une direction axiale, afin de fixer l'élément protecteur dans la direction axiale.

10. Le refroidisseur d'air de l'une quelconque des revendications précédentes, dans lequel une pluralité de rainures parallèles sont disposées de façon à s'étendre dans la seconde direction transversale, et une rainure supplémentaire, s'étendant dans la première direction transversale, relie les rainures et forme la région d'extrémité des rainures.

11. Le refroidisseur d'air de l'une quelconque des revendications précédentes, dans lequel les parties d'extrémité de l'élément protecteur sont agencées dans les rainures, un espacement étant disposé dans la seconde direction transversale et/ou dans la direction axiale afin de permettre une dilatation thermique de l'élément protecteur.

12. Le refroidisseur d'air de l'une quelconque des revendications précédentes, dans lequel les parties d'extrémité de l'élément protecteur, agencées dans les rainures, s'étendent à un niveau axial élevé à une certaine distance du niveau axial d'une partie principale de l'élément protecteur agencé sur la surface axiale avant de la plaque d'échange de chaleur, et dans lequel, de préférence, les parties d'extrémité sont reliées à la partie principale à l'aide d'une partie de raccordement arquée.

13. Le refroidisseur d'air de l'une quelconque des revendications précédentes, dans lequel l'élément protecteur est fixé dans le refroidisseur d'air à l'aide d'une force de ressort, et dans lequel, de préférence, au moins une partie d'extrémité de l'élément protecteur forme un élément ressort permettant de fournir la force de ressort.

14. Le refroidisseur d'air de la revendication 13, dans lequel la force de ressort pousse l'élément protecteur contre la surface avant de la plaque d'échange de chaleur dans la direction axiale.

15. Moteur comprenant un refroidisseur d'air selon l'une quelconque des revendications précédentes, dans lequel le refroidisseur d'air est disposé de préférence entre la sortie d'un compresseur d'un turbocompresseur de suralimentation et une entrée d'air du moteur.
